# EUROPÄISCHE PATENTSCHRIFT

(11) **EP 0 873 545 B1**
(45) Veröffentlichungstag und Bekanntmachung des Hinweises auf die Patenterteilung: **17.10.2001**
(21) Anmeldenummer: 97906985.3
(22) Anmeldetag: 08.01.1997
(51) Int. Cl.: G05B 19/4103

(54) **VERFAHREN ZUR DEZENTRALEN STEUERUNG EINES MOTORANTRIEBS**
METHOD FOR THE DECENTRALIZED CONTROL OF A MOTOR DRIVE
PROCEDE DE COMMANDE DECENTRALISEE D'UN ENTRAINEMENT DE MOTEUR

(30) Priorität: 12.01.1996 DE 19600882
(43) Veröffentlichungstag der Anmeldung: 28.10.1998
(73) Patentinhaber: Heesemann, Jürgen, Dipl.-Ing., D-32547 Bad Oeynhausen (DE)
(72) Erfinder: Heesemann, Jürgen, Dipl.-Ing., D-32547 Bad Oeynhausen (DE)
(74) Vertreter: Lins, Edgar, Dipl.-Phys. Dr.jur.
(86) Internationale Anmeldenummer: DE9700012
(87) Internationale Veröffentlichungsnummer: WO9725661

(56) Entgegenhaltungen:
- EP-A- 0 394 474
- EP-A- 0 406 784
- EP-A- 0 470 564
- EP-A- 0 642 893
- WO-A-92/02871
- US-A- 4 663 726
- MICROPROCESSING AND MICROPROGRAMMING, Bd. 23, Nr. 1/5, März 1988, AMSTERDAM, NL, Seiten 129-133, XP000006973 WOLFGANG A. HALANG: "AN INDEPENDENTLY WORKING COMPUTER PERIPHERAL GENERATING ROBOT ARM TRAJECTORIES"

## Beschreibung

Die Erfindung betrifft ein Verfahren zur dezentralen Steuerung eines Motorantriebs, dem von einer zentralen Steuerung Bewegungsaufgaben in Form von in sehr kurzen Zeitabständen übertragenen Weg- und Zeitdaten für voneinander beabstandete Stützpunkte vorgegeben werden und dem eine eigene intelligente dezentrale Steuerung zugeordnet ist, die den Motorantrieb so steuert, daß die vorgegebenen Bewegungsaufgaben eingehalten werden.

Ein derartiges Verfahren ist beispielsweise durch DE 41 08 074 C2 bekannt. Dabei ist einem Motorantrieb eine eigene lokale intelligente Steuerung zugeordnet, die in diesem Fall unmittelbar am Gehäuse des Motorantriebs angesetzt ist.

Die Übertragung der Bewegungsaufgaben erfolgt so, dass in sehr kurzen Zeitabständen Daten für Stützpunkte übertragen werden, die von dem Motorantrieb durchlaufen werden. Unter der Bedingung eines stetigen Anschlusses der jeweiligen Kurvenstücke zwischen den Stützpunkten führt die dezentrale Steuerung die entsprechende Steuerung des Motorantriebs durch. In diesem Konzept sind die zwischen den Stützpunkten ausgeführten Bahnkurven weitgehend beliebig, sodass für eine möglichst genaue Steuerung Stützpunkte in sehr kurzen Zeitabständen übertragen werden müssen, insbesondere wenn mehrere Motorantriebe eine gemeinsame Antriebsfunktion ausüben, beispielsweise eine zwei- oder dreidimensionale vorgegebene Bewegung ausführen sollen. Erforderlich ist daher die Übertragbarkeit einer hohen Datenmenge über den Datenbus zwischen der zentralen Steuerung und der intelligenten dezentralen Steuerungen der einzelnen Motorantriebe, um die notwendigerweise erforderlichen Ungenauigkeiten zwischen den Stützpunkten möglichst gering zu halten.

Durch WO 92/02871 ist ein Verfahren zur Steuerung der Bewegung einer Filmkamera auf einem vorprogrammiertem Weg während einer Filmaufnahme bekannt. Ein Motorsteuerungsmodul generiert Bewegungsaufgaben (Kurven) für eine Reihe von Motorantrieben für diverse Achsen, die in Steuersignale für Motorantriebsmodule umgewandelt werden. Das Motorsteuerungsmodul erfüllt die Aufgabe einer zentralen Steuerung, während die Motorantriebsmodule als dezentrale Steuerung angesehen werden können. Die spezielle Übertragung von Signale aus dem Motorsteuerungsmodul auf die Motorantriebsmodule ist nicht offenbart, sodass davon auszugehen ist, dass in üblicher Weise - wie bei der DE-C-41 08 074 - Daten für Stützpunkte übertragen werden.

Der Erfindung liegt daher die Problemstellung zugrunde, ein Verfahren zur dezentralen Steuerung so auszubilden, daß eine hohe Steuerungsgenauigkeit auch mit einer geringeren von der zentralen Steuerung zu der dezentralen Steuerung übermittelten Datenmenge erreichbar ist.

Ausgehend von dieser Problemstellung ist ein Verfahren der eingangs erwähnten Art erfindungsgemäß dadurch gekennzeichnet, daß für die dezentrale Steuerung wenigstens ein Algorithmus zur Bildung einer Weg-Zeit-Funktion vorgegeben wird und daß von der zentralen Steuerung neben den Weg- und Zeitdaten wenigstens eine Information zur Bildung der Weg-Zeit-Funktion nach dem Algorithmus zwischen den Stützpunkten übertragen wird.

Das erfindungsgemäße Verfahren beruht darauf, daß durch die dezentrale Steuerung eine Bahnkurve zwischen den Stützpunkten realisiert wird, die durch die zentrale Steuerung eindeutig vorgegeben ist. Dies bedeutet, daß die von der Motorsteuerung bewirkte Bahnkurve prinzipiell auf allen Punkten auch zwischen den Stützpunkten definiert ist und beliebig genau eingehalten werden kann, ohne daß hierfür riesige Datenmengen von der zentralen Steuerung zur dezentralen Steuerung übertragen werden müßten. Das erfindungsgemäße Konzept bietet den Vorteil, daß Stützpunkte regelmäßig nur in größeren zeitlichen Abständen, die sich bis in den Zehntelsekundenbereich hin erstrecken können, übertragen werden müssen, so daß der Abstand zwischen den übertragenen Stützpunkten um Größenordnungen größer ist als der bisherige zeitliche Abstand von übertragenen Stützpunkten für eine halbwegs genaue Steuerung.

Da es erfindungsgemäß möglich ist, prinzipiell jede beliebige Genauigkeit für die von einem Motorantrieb bewirkte Bahnkurve zu realisieren, läßt sich die Erfindung insbesondere mit Vorteil bei dem Zusammenspiel mehrerer Motorantriebe zum Hantieren oder Bearbeiten von Werkstücken verwenden. Die hierfür erforderliche Synchronisation der Motorantriebe kann über ein extern vorgegebenes Taktsignal, über den Datenbus zwischen zentraler Steuerung und dezentralen Steuerungen oder über eine Funkuhr erfolgen. Die Zeit zwischen den Synchronisationssignalen kann dabei von einer zwischen den Synchronisationssignalen genau laufenden internen Uhr mit feinen Takten überbrückt werden.

In einer bevorzugten Ausführungsform der Erfindung werden als zusätzliche Information Daten über die Steigungen der Weg-Zeit-Funktion in den Stützpunkten übertragen. Dies kann dadurch erfolgen, daß neben den Daten der Stützpunkte die Steigung in den Stützpunkten als Zusatzinformation übertragen wird.

Die zusätzliche Information über den Kurvenverlauf kann auch durch die Lage wenigstens eines nicht auf der Bahnkurve liegenden Höchstpunktes zwischen den Stützpunkten erfolgen. Dies ist insbesondere dann sinnvoll, wenn als Algorithmus für die Weg-Zeit-Funktion Bezier-Kurven verwendet werden, was wegen des damit verbundenen vergleichsweise geringen Rechenaufwands bevorzugt ist. Eine weitere Möglichkeit für die Verwendung von Hilfspunkten ergibt sich bei der Anwendung einer Spline-B-Kurve.

Für die Verwendung von Bezier-Kurven ergibt sich ein minimaler Rechenaufwand, wenn als zusätzliche Information die Lage des Schnittpunktes der Tangenten an den Stützpunkten übertragen wird. Hierdurch wird die Steigung der Weg-Zeit-Funktion in den Stützpunkten charakterisiert, jedoch nur die Information über einen einzigen Hilfspunkt übermittelt. In der numerischen Berechnung der Bezier-Kurve nach Casteljau ergibt sich hierfür die Berechnung in einer einzigen Rechenschleife, so daß ein sehr geringer Rechenaufwand erforderlich ist, der in kürzester Rechenzeit erledigt werden kann.

Die Einhaltung der vorberechneten Bahnkurve durch den Motorantrieb kann mit der dezentralen Steuerung durch Regelung des Motorantriebs erfolgen, wobei der Ist-Zustand durch Wegsensoren des Motorantriebs und/oder des angetriebenen Werkzeugs ermittelt wird. Selbstverständlich kann dabei auch ein im Motor selbst integrierter Motorgeber für die Ermittlung des Ist-Zustandes verwendet werden.

Der Regelalgorithmus kann dabei so eingestellt werden, daß der Strom des Motorantriebs so gesteuert wird, daß der vorberechnete Weg genauestmöglich eingehalten wird. Im Unterschied hierzu war der Regelalgorithmus in früherer Technik auf die optimale Geschwindigkeit zwischen zwei nebeneinanderliegenden Stützpunkten abgestellt.

Die Regelung kann mit bekannten Regelalgorithmen, aber auch mit Fuzzyreglern bzw. deren Rechenregeln durchgeführt werden. Durch die alleinige Konzentration des Reglers auf das genaue Fahren auf der Weg-Zeit-Funktion mit einfachen Regelalgorithmen (z.B. P-, PI-Regler usw.) kann die Abtastrate bei gleicher Rechenleistung der verwendeten Hardware gegenüber konventionellen Systemen erhöht werden.

Durch die möglichen geringen Wegeabweichungen durch die genaue Wegdefinition zwischen den Stützpunkten, die genaue Regelung auf die Position zum jeweiligen Zeitpunkt hin und die starre zeitliche Synchronisation können mit einem derart gesteuerten dezentralen Servoantrieb äußerst hohe Bahngeschwindigkeiten bei geringem apparativen Aufwand auch mit vergleichsweise einfachen und langsamen Bussystemen erzielt werden. Weiterhin ist es möglich, eine nahezu beliebige Anzahl von zueinander synchronisierten Achsen bahngeregelt laufen zu lassen.

Durch die dezentrale Struktur lassen sich die Antriebe auch für bahngesteuerte Servoachsen in unmittelbarer Nähe der Servomotoren und ihrer Wegmeßsysteme oder sogar mechanisch mit diesen verbunden einsetzen. Bei entsprechendem konstruktiven Aufbau lassen sich hierdurch die sonst von langen Motorzuleitungskabeln, die mit pulsweitenmodulierten Signalen beaufschlagt werden, ausgehenden Störungssignale in die Umgebung vermeiden.

Das erfindungsgemäße Arbeitsprinzip läßt sich auch für geregelte und ungeregelte Schrittmotoren einsetzen, indem der Schrittmotorantrieb mit einer Vielzahl von Steuerungsschritten zwischen den Stützpunkten entsprechend der ermittelten Weg-Zeit-Funktion gesteuert wird. Ein Prozessor der dezentralen Steuerung ermittelt entsprechend der Weg-Zeit-Funktion den passenden Zeitpunkt für den nächsten Schritt des Schrittmotors in Form eines Steuerimpulses, so daß der Schrittmotor genau an der berechneten Bahnkurve entlangfährt. Bei geregelten Systemen kann der sich einstellende Lastwinkel entsprechend korrigiert werden.

Selbstverständlich lassen sich mit der vorliegenden Erfindung auch Linearmotoren steuern bzw. regeln.

Durch die optimale Einstellung des Stromes für eine genaue Fahrt an der Weg-Zeit-Funktion entlang können nun auch Motoren mit einer ungleichmäßigen Momententwicklung, z.B. Reluktanzmotoren, optimal geregelt werden, ohne daß eine aufwendige mathematische Korrektur in der Regelung erforderlich wird, da die hohe Abtastrate eine schnelle Korrektur der real notwendigen und an jedem neuen Ort feststellbaren Stromeinstellung ermöglicht.

Wenn mehrere an mindestens einer Vorschubvorrichtung hintereinander angeordnete Achsen, wie dies z.B. bei Holzbearbeitungsmaschinen üblich ist, zeitlich synchronisiert zur Vorschubachse als Führungsachse gesteuert werden müssen, lassen sich mit einem beschriebenen Antrieb diese Systeme sehr einfach aufbauen. Ein besonderer Vorteil entsteht hierbei, wenn die zu verfahrenden Wege durch Abtastung eines durchlaufenden Werkstücks am Einlauf der Maschine generiert werden und bereits als Weg-Zeit-Profil vorliegen. Dieses muß dann lediglich hinsichtlich der optimalen Lage der Stützpunkte untersucht und an die dezentralen Antriebe weitergegeben werden.

Auch die Generierung von Bahnkurven für die Bearbeitung oder die Behandlung von z.B. durch Bildverarbeitungsgeräte oder Taster abgetastete Werkstücke wird durch die direkte Wandlung in Weg-Zeit-Funktionen für die jeweiligen dezentralen Steuerungen erleichtert und beschleunigt. Dies gilt für ein-, zweiund dreidimensionale Werkstückerfassungen. Bei der direkten Werkstückabtastung mit mechanischen oder optischen oder ähnlich wirkenden Tastern kann es genügen, die bei der Abtastung aufgenommene Weg-Zeit-Funktion nur noch auf die optimale Bearbeitungsgeschwindigkeit und die notwendigen Werkzeugkorrekturen anzupassen und ohne aufwendige weitere Rechenarbeit auf die dezentralen Antriebe zu übertragen.

In Spezialfällen kann es vorteilhaft sein, die dezentralen Antriebe so auszurüsten, daß sie in Abhängigkeit von z.B. geschwindigkeitsabhängigen Signalen einer Führungsachse, z.B. einer Vorschubeinrichtung, selbsttätig die vorgegebenen Weg-Zeit-Funktionen an die aktuellen Werte anpassen. Dies bedeutet eine parameterabhängige Modifikation der von der zentralen Steuerung übermittelten Daten für die Stützpunkte und den Kurvenverlauf zwischen den Stützpunkten.

Die Erfindung soll im folgenden anhand eines in der Zeichnung dargestellten Ausführungsbeispiels näher erläutert werden. Es zeigen:
- Figur 1 -: ein Blockschaltbild für einen dezentralen Antrieb,
- Figur 2 -: eine schematische Darstellung für die Ermittlung einer Weg-Zeit-Funktion aufgrund von für Stützpunkte übermittelten Daten,
- Figur 3 -: eine schematische Darstellung der Ermittlung der Bahnkurve unter Verwendung eines Hilfspunktes.

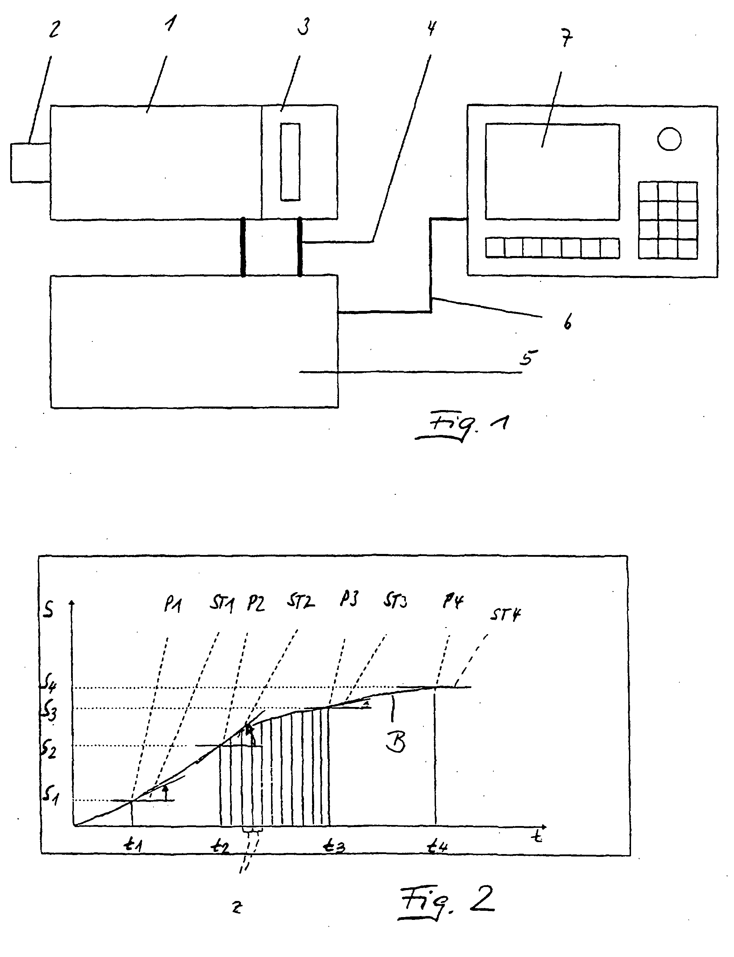

Figur 1 zeigt einen Motorantrieb 1 mit einer Antriebswelle 2 und einem in den Motorantrieb 1 integrierten Wegsensor 3, der als Positionsgeber oder komplettes Wegmeßsystem ausgebildet sein kann.

Der Motorantrieb 1 ist über ein Verbindungskabel 4 mit einer dezentralen intelligenten Steuerung 5 verbunden. Diese wiederum ist über einen Datenbus 6 mit einer als Computerterminal dargestellten zentralen Steuerung 7 verbunden.

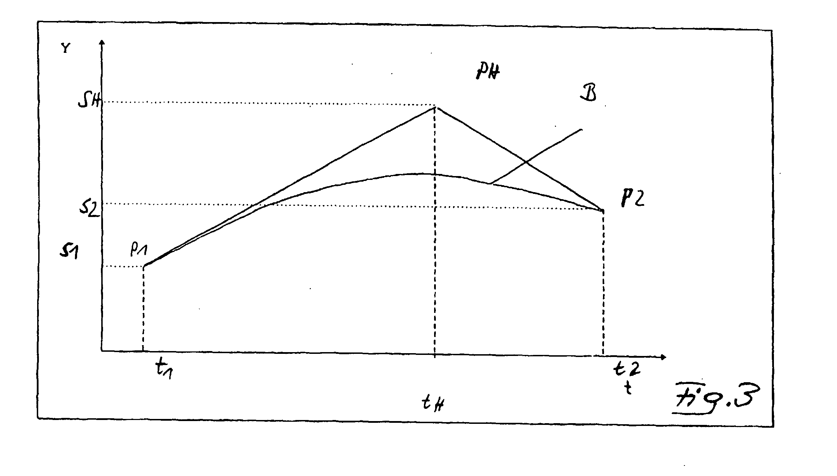

Figur 2 zeigt ein Weg-Zeit-Diagramm mit vier Stützpunkten P1, P2, P3, P4, deren zugehörige Koordinaten s1, t1; s2, t2; s3, t3; s4, s4 von der zentralen Steuerung 7 auf die dezentrale Steuerung 5 über den Datenbus 6 übertragen werden. Erfindungsgemäß wird zusätzlich eine Information über die Steigung ST1, ST2, ST3, ST4 in den zugehörigen Stützpunkten P1, ... P4 übermittelt. Die Steigungswerte sind in Figur 2 durch Tangenten in den Stützpunkten P1, ... P4 dargestellt.

Aus den Stützpunktdaten s1, t1, ST1 ... läßt sich unter Vergabe eines Polynoms als Algorithmus die Bahnkurve B für praktische Zwecke eindeutig ermitteln. Für das Intervall t2-t3 ist dargestellt, daß die Steuerung bzw. Regelung durch die dezentrale Steuerung 5 in gegenüber dem Zeitinterval t2-t3 sehr kleinen Zeitabständen Z erfolgen kann, so daß eine beliebige Genauigkeit für die Ausführung der Bahnkurve B durch den Motorantrieb 1 erreichbar ist.

Figur 3 verdeutlicht als Beispiel die Ermittlung der Bahnkurve B zwischen zwei Stützpunkten P1 und P2 unter Verwendung der Koordinaten sH, tH eines Hilfspunktes PH, der als Schnittpunkt der Tangenten der Weg-Zeit-Funktion an den Stützpunkten P1 und P2 entstanden ist. Unter Anwendung einer iterativen Bezier-Berechnung wird die Bahnkurve B aus diesen Werten für praktische Zwecke eindeutig ermittelt, wobei deutlich wird, daß die Bahnkurve durch die Stützpunkte P1 und P2, nicht jedoch durch den Hilfspunkt PH läuft. Die Verwendung eines einzigen Hilfspunktes PH zur Ermittlung der Bahnkurve B führt zu einer sehr einfachen Berechnung mit kurzer Rechenzeit.

## Patentansprüche

1. Verfahren zur dezentralen Steuerung eines Motorantriebs (1), dem von einer zentralen Steuerung (7) Bewegungsaufgaben in Form von in sehr kurzen Zeitabständen übertragenen Weg- und Zeitdaten für voneinander beabstandete Stützpunkte (P1, P2, P3, P4) vorgegeben werden und dem eine eigene intelligente dezentrale Steuerung (5) zugeordnet ist, die den Motorantrieb (1) so steuert, daß die vorgegebenen Bewegungsaufgaben eingehalten werden, **dadurch gekennzeichnet, daß** für die dezentrale Steuerung (5) wenigstens ein Algorithmus zur Bildung einer Weg-Zeit-Funktion vorgegeben wird und daß von der zentralen Steuerung (7) neben den Weg- und Zeitdaten (s1, s2, s3, s4; t1, t2, t3, t4) wenigstens eine Information (ST1, ST2, ST3, ST4; sH, tH) zur Bildung der Weg-Zeit-Funktion nach dem Algorithmus zwischen den Stützpunkten (P1 bis P4) übertragen wird.

2. Verfahren nach Anspruch 1, **dadurch gekennzeichnet, daß** als zusätzliche Information Daten über die Steigungen (ST1 bis ST4) der Weg-Zeit-Funktion in den Stützpunkten (P1 bis P4) übertragen wird.

3. Verfahren nach Anspruch 1 oder 2, **dadurch gekennzeichnet, daß** als zusätzliche Information die Lage wenigstens eines nicht auf der Bahnkurve (B) liegenden Hilfspunktes (PH) zwischen den Stützpunkten (P1, P2) übertragen wird.

4. Verfahren nach Anspruch 2 und 3, **dadurch gekennzeichnet, daß** als zusätzliche Information die Lage des Schnittpunktes der Tangenten an den Stützpunkten (P1, P2) übertragen wird.

5. Verfahren nach einem der Ansprüche 1 bis 4, **dadurch gekennzeichnet, daß** als Algorithmus für die Weg-Zeit-Funktion Bezierkurven verwendet werden.

6. Verfahren nach einem der Ansprüche 1 bis 5, **dadurch gekennzeichnet, daß** mit der dezentralen Steuerung (5) und mit Wegsensoren (3) eine Regelung des Motorantriebs (1) zur Einhaltung der ermittelten Weg-Zeit-Funktion vorgenommen wird.

7. Verfahren nach einem der Ansprüche 1 bis 6, **dadurch gekennzeichnet, daß** mit der dezentralen Steuerung (5) ein Schrittmotorantrieb mit einer Vielzahl von Steuerungsschritten zwischen den Stützpunkten (P1 bis P4) entsprechend der ermittelten Weg-Zeit-Funktion gesteuert wird.

8. Verfahren nach Anspruch 7, **dadurch gekennzeichnet, daß** entsprechend der ermittelten Weg-Zeit-Funktion der jeweilige Zeitpunkt für den nächsten Schritt des Schrittmotors gesteuert wird.

9. Verfahren nach einem der Ansprüche 1 bis 8, **dadurch gekennzeichnet, daß** vor der Steuerung des Motorantriebs (1) mit der Weg-Zeit-Funktion eine Prüfung daraufhin vorgenommen wird, ob die Bewegungsaufgabe innerhalb der Leistungsfähigkeit des Motorantriebs (1) liegt und daß eine neue Berechnung der Bewegungsaufgabe durch die zentrale Steuerung (7) veranlaßt wird, wenn die Leistungsfähigkeit des Motorantriebs (1) überschritten werden würde.

## Claims

1. Method for the decentralized control of a motor drive (1) for which movement tasks in the form of path and time data, which are transmitted at very short intervals in time, for supporting points (P1, P2, P3, P4) which are at a distance from one another, are preset by a central control device (7), and which has associated with it an intelligent decentralized control device (5) of its own which controls the said motor drive (1) in such a way that the preset movement tasks are fulfilled, **characterized in that** at least one algorithm for forming a path/time function is preset for the decentralized control device (5) and that, in addition to the path and time data (sl, s2, s3, s4; t1, t2, t3, t4), at least one item of information (ST1, ST2, ST3, ST4; sH, tH) for forming the path/time function according to the algorithm between the supporting points (P1 to P4) is transmitted by the central control unit (7).

2. Method according to claim 1, **characterized in that** data concerning the increases (ST1 to ST4) in the path/time function at the supporting points (P1 to P4) are transmitted as additional information.

3. Method according to claim 1 or 2, **characterized in that** the location of at least one auxiliary point (PH) between the supporting points (P1, P2), which auxiliary point does not lie on the path curve (B), is transmitted as additional information.

4. Method according to claims 2 and 3, **characterized in that** the location of the point of intersection of the tangents at the supporting points (P1, P2) is transmitted as additional information.

5. Method according to one of claims 1 to 4, **characterized in that** Bezier curves are-used as the algorithm for the path/time function.

6. Method according to one of claims 1 to 5, **characterized in that** regulation of the motor drive (1) for the purpose of fulfilling the path/time function ascertained is effected by means of the decentralized control device (5) and of path sensors (3).

7. Method according to one of claims 1 to 6, **characterized in that** a stepping motor drive with a large number of control steps between the supporting points (P1 to P4) is controlled by means of the decentralized control device (5) in accordance with the path/time function ascertained.

8. Method according to claim 7, **characterized in that** the particular point in time for the next step of the stepping motor is controlled in accordance with the path/time function ascertained.

9. Method according to one of claims 1 to 8, **characterized in that**, before the controlling of the motor drive (1) by means of the path/time function, a test is carried out as to whether the movement task lies within the capability of the said motor drive (1), and that a new calculation of the movement task by the central control device (7) is induced if the capability of the motor drive (1) would be exceeded.

## Revendications

1. Procédé pour la commande décentralisée d'un entraînement motorisé (1), auquel une commande centrale (7) prescrit des missions de mouvement sous la forme de données de déplacement et de temps transmises à très courts intervalles de temps pour des points particuliers (P1, P2, P3, P4) espacés les uns des autres, et auquel est associée sa propre commande décentralisée intelligente (5) qui commande l'entraînement motorisé (1) de façon que les missions de déplacement prescrites sont respectées, **caractérisé en ce que** pour la commande décentralisée (5) est prescrit au moins un algorithme pour l'établissement d'une fonction déplacement-temps, et **en ce qu'**en plus des données de déplacement et de temps (s1, s2, s3, s4;t1, t2, t3, t4) la commande centrale (7) transmet au moins une information (ST1, ST2, ST3, ST4; sH, tH) pour l'établissement de la fonction déplacement-temps suivant l'algorithme entre les points particuliers (P1 à P4).

2. Procédé selon la revendication 1, **caractérisé en ce que** comme information supplémentaire il est transmis des données sur la pente (ST1 à ST4) de la fonction déplacement-temps aux points particuliers (P1 à P4).

3. Procédé selon la revendication 1 ou 2, **caractérisé en ce qu'**il est transmis comme information supplémentaire la position d'au moins un point auxiliaire (PH) ne se trouvant pas sur la courbe de parcours (B) entre les points particuliers (P1, P2).

4. Procédé selon la revendication 2 ou 3, **caractérisé en ce qu'**il est transmis comme information supplémentaire la position de l'intersection des tangentes aux points particuliers (P1, P2).

5. Procédé selon l'une des revendications 1 à 4, **caractérisé en ce que** comme algorithme pour la fonction déplacement-temps on utilise des courbes de Bezier.

6. Procédé selon l'une des revendications 1 à 5, **caractérisé en ce qu'** au moyen de la commande décentralisée (5) et de capteurs de déplacement (3), on procède à une régulation de l'entraînement motorisé (1) pour respecter la fonction déplacement-temps générée.

7. Procédé selon l'une des revendications 1 à 6, **caractérisé en ce qu'**au moyen de la commande décentralisée (5) on commande un entraînement à moteur pas à pas avec de multiples pas de commande entre les points particuliers (P1 à P4) en correspondance avec la fonction déplacement-temps générée.

8. Procédé selon la revendication 7, **caractérisé en ce qu'**en correspondance avec la fonction déplacement-temps générée on commande l'instant respectif pour le pas suivant du moteur pas à pas.

9. Procédé selon l'une des revendications 1 à 8, **caractérisé en ce qu'**avant de commander l'entraînement motorisé (1) avec la fonction déplacement-temps on procède à un examen pour déterminer si la mission de déplacement est dans les aptitudes de puissance de l'entraînement motorisé (1), et **en ce qu'**un nouveau calcul de la mission de déplacement est lancé par la commande centrale (7) lorsque l'aptitude de puissance de l'entraînement motorisé (1) est dépassée.
